# EUROPEAN PATENT SPECIFICATION

(11) **EP 2 822 722 B1**
(45) Date of publication and mention of the grant of the patent: **28.11.2018**
(21) Application number: 13710016.0
(22) Date of filing: 16.01.2013
(51) Int. Cl.: B23B 31/26, B23Q 3/12, B23Q 3/157, B23Q 3/155, B23B 31/00

(54) **REDUCTION ACCESSORY WITH SYSTEM FOR COUPLING IT WITH A SPINDLE OF A MACHINE TOOL**
VERKLEINERUNGSZUBEHÖR MIT SYSTEM ZUR KOPPLUNG MIT EINER SPINDEL EINER WERKZEUGMASCHINE
ACCESSOIRE DE RÉDUCTION AVEC SYSTÈME POUR LE COUPLAGE D'UNE BROCHE À UNE MACHINE-OUTIL

(30) Priority: 09.03.2012 IT BS20120032
(43) Date of publication of application: 14.01.2015
(73) Proprietor: Innse-Berardi S.p.A., 25127 Brescia (IT)
(72) Inventor: FLORIS, Fabio, I-25127 Brescia (IT); VALSECCHI, Natale, I-25127 Brescia (IT)
(74) Representative: Pulieri, Gianluca Antonio
(86) International application number: PCT/IB2013/050383
(87) International publication number: WO 2013/132358

(56) References cited:
- DE-A1- 3 506 901
- JP-A- 63 318 234
- US-A- 4 614 470
- US-A- 4 958 968
- US-A- 5 211 515
- US-A- 5 954 623
- US-A- 6 077 206
- US-A1- 2011 107 573

## Description

The present invention is intended for the machine tool sector, and in particular large size machine tools. The subject of the present invention is a coupling system between a spindle having a cone attachment of predefined dimensions and an accessory having a cone attachment of smaller dimensions.
In particular the present invention relates to a reduction accessory according to the preamble of claim 1.

Such a reduction accessory is known from DE 35 06 901 A1.

For example, an embodiment shows an attachment device between a spindle having an ISO 60 cone attachment, defined according to the DIN 69871 standard, and a reduction accessory having an ISO 50 cone attachment.

Generally, a spindle of a machine tool, especially of large size, has an ISO 60 cone attachment, for the connection of a plurality of tools; nevertheless, to perform some jobs, the need can arise to use tools of smaller dimensions, having an ISO 50 engagement tang. In these cases, to the ISO 60 cone attachment is usually connected a reduction accessory having an ISO 50 cone attachment, so as to be able to couple the desired tools.

Nevertheless, the attachment devices of the reduction accessories known today have a number of drawbacks, in particular their scarce reliability. It often occurs in fact that the reduction accessory disconnects from the spindle, e.g., due to accidental knocks, e.g., against the pieces to be machined, or during tool change operations or again due to stresses or vibrations caused by particularly vigorous machining operations.

Object of the present invention is to make an attachment device for a reduction accessory able to overcome the aforementioned drawbacks with reference to prior art.

Such object is achieved by a reduction accessory according to the claim 1.

The characteristics and the advantages of the connection device according to the present invention will become evident from the description provided below, to be deemed a non-limitative example, in agreement with the attached illustrations, wherein:

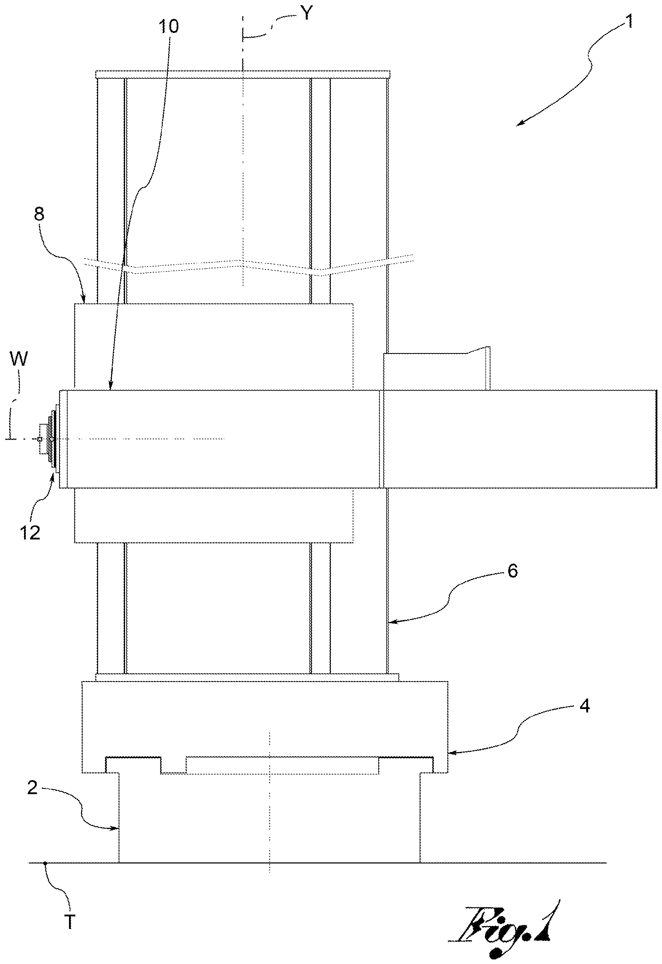

- the figure 1 shows a schematic side view of a machine tool for the reduction accessory according to the present invention;

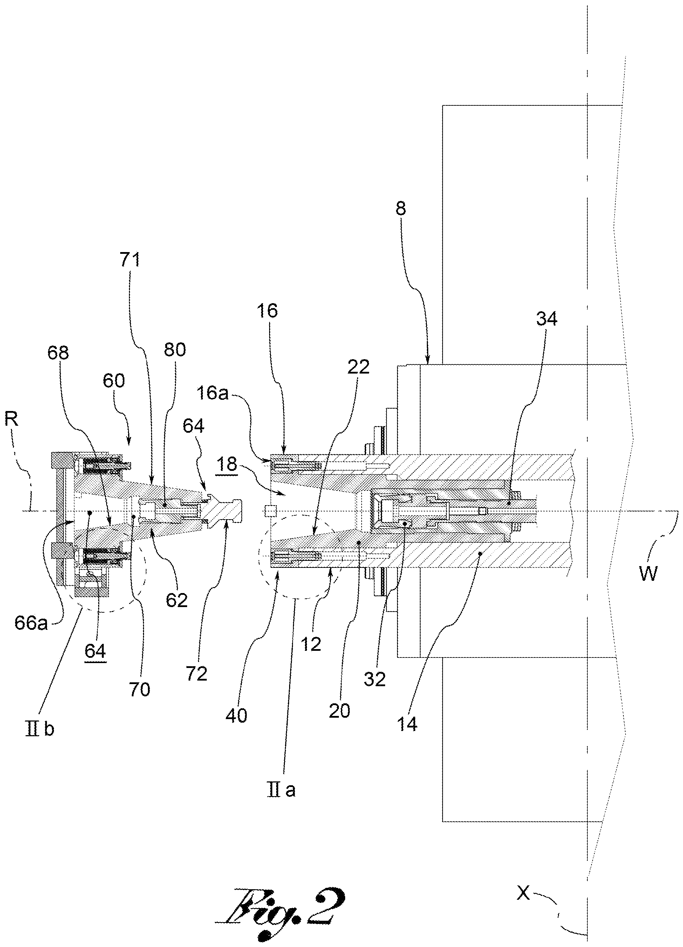

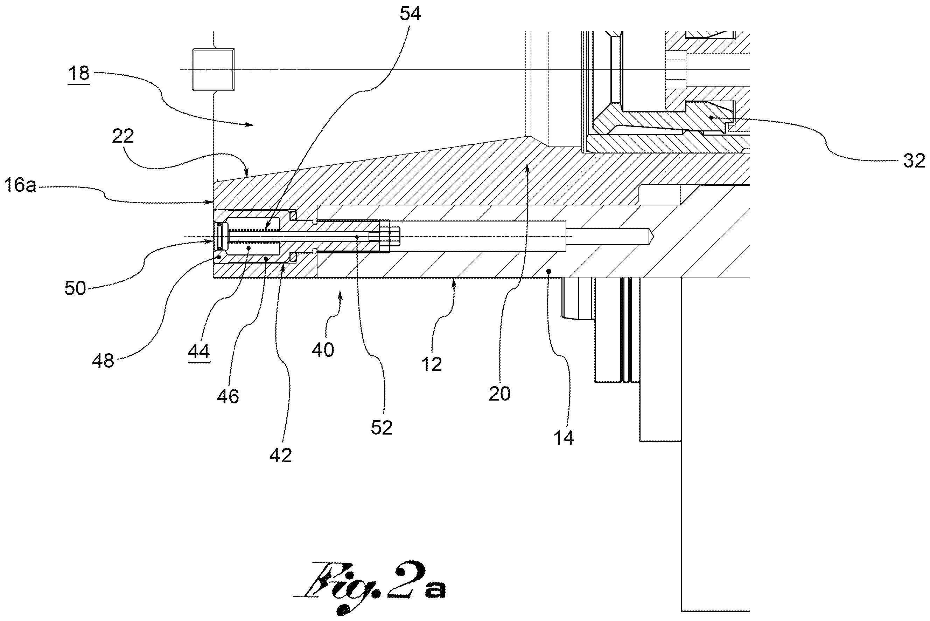

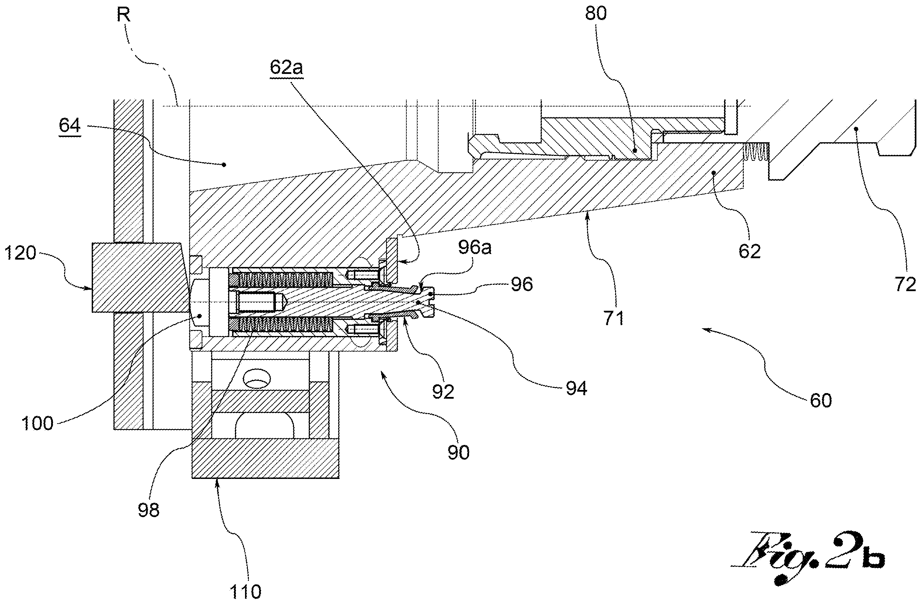

- the figure 2 represents a plan view of the machine in figure 1 and a reduction accessory according to the present invention, in a separation configuration;
- the figure 2a shows an enlargement of the box IIa in figure 2;
- the figure 2b shows an enlargement of the box IIb in figure 2;
- the figure 3 shows the machine and the accessory of the figure 2, in a coupling configuration;
- the figure 3a shows an enlargement of the box IIIa in figure 3;
- the figure 4 shows the machine and the accessory of the figure 2, in a work configuration;
- the figure 4a shows an enlargement of the box IVa in figure 4;
- the figure 5 shows a device for engaging a spindle of the machine tool and a device for coupling onto the accessory, according to an embodiment variation, in a coupling configuration;
- the figure 6 shows the engagement device and the attachment device of the figure 5, in a work configuration.

With reference to the attached illustrations, by 1 is altogether indicated a machine tool, and in particular a large-size machine tool, e.g., a milling-boring machine, comprising a bench 2 having an extension prevalently along a main axis X.

The bench 2 is fixed and rests on foundations and the supporting surface determines a horizontal T-shaped floor plane.

The machine 1 also comprises an upright base 4, surmounting the bench 2 and is supported by this, translatable in a controllable way along the main axis X.

The machine 1 also comprises an upright 6, fixed on the upright base 4 and supported by this, having an extension prevalently along a vertical axis Y, at right angles to the floor plane T. The upright 6 has a preferably boxed structure and is delimited by a boxed side wall extending along said vertical axis Y.

The machine 1 also comprises a carriage 8, supported by the upright 6, engaged with the side wall of this, translatable in a controllable way along the vertical axis Y.

The machine 1 also comprises a spindle-holder 10, supported by the carriage 8, and a spindle 12 supported by the spindle-holder 10, rotatable around a work axis W, at right angles to the vertical axis Y and to the main axis X, to carry out the machining operations; preferably, the spindle-holder 10 is translatable along the direction of said work axis W, in a controllable way.

The spindle 12 comprises an external liner 14 extending along the work axis W between a rear extremity and a front extremity 16, terminating with a front surface 16a, lying on a plane at right angles to the work axis W.

The spindle 12 also comprises a tubular wall 20 accommodated in the liner 14, having an internal compartment shaped so as to form an engagement seat 18, delimited by a truncated-cone surface 22, which opens on the front surface 16a, and preferably a rear seat 22, adjacent to the engagement seat 18, e.g., delimited by a cylindrical surface.

The engagement seat 18 represents a cone attachment of predefined dimensions, e.g., an ISO 60 cone attachment.

The spindle 12 also comprises grip means suitable for being operated to fasten on a tool and retain it in the engagement seat 18.

The grip means comprise a spring clamp 32, e.g., a collet, housed in the compartment of the tubular wall 20, and in particular in the rear seat 22 of this, suitable for engaging a tool fitted in the engagement seat.

Furthermore, said grip means comprise a grip device 34, engaged with the spring clamp 32, suitable for being operated to activate or release the spring clamp 32.

During the normal use of an ISO 60 tool having a specific tang, said ISO 60 tool is fitted in the engagement seat 18 creating a form coupling with the truncated-cone surface 22, while the tang is engaged by the spring clamp 32. By activating the grip means 34, the spring clamp closes on the tang of the ISO 60 tool and pulls the tool inwards, locking it in the work position.

The spindle 12 also comprises at least an engagement device 40 comprising a tubular tang 42 having inside it an engagement seat 44 accessible from the front surface 16a, delimited by a side wall 46 which comprises a prominence 48 protruding in the engagement seat 44.

Preferably, said engagement device 40 comprises yielding closing means suitable for closing the access to the engagement seat 44.

For example, the closing means comprise a cover 50 suitable for closing the access to the engagement seat 44, a sliding rod 52, to which the cover 50 is connected, and a spring 54, engaged with the cover or with the rod to permanently influence the cover towards the closing configuration of the access to the engagement seat 44.

According to a preferred embodiment, the tang 42 is front fitted in the spindle 12, and in particular crosses a tract of the tubular wall 20 and penetrates for a further tract into the liner 14.

The spindle 12 is engageable with an accessory, in particular a reduction accessory 60, comprising a main hollow body 62 which extends along an accessory axis R from an engagement extremity 64 to a work extremity 66, terminating in a front work surface 66a, at right angles to the accessory axis R.

Internally, the main body 62 has a compartment consisting of a reduced seat 64, delimited by a truncated-cone surface 68, which opens on the front work surface 66a, and preferably by an auxiliary seat 70, adjacent to the reduced seat 64.

The reduced seat 64 represents a cone attachment of reduced dimensions, with respect to the cone attachment of the engagement seat 18 of the spindle 12, e.g., an ISO 50 cone attachment.

The main body 62 also has a truncated-cone attachment surface 71, suitable for coupling itself with form coupling to the engagement seat 18 of the spindle 12.

The main body 62 also has an abutment surface 62a, at right angles to the accessory axis R, in the form of a circular crown, placed in correspondence to the termination of the attachment surface 71.

The reduction accessory 60 also comprises an engagement tang 72, arranged in a position adjacent to the coupling surface 70, suitable for being gripped by the spring clamp 32 of the spindle 12.

Furthermore, the accessory 60 comprises a reduced spring clamp 80, e.g., a collet, housed in the auxiliary seat 70 of the compartment of the main body, in a position suitable for gripping a tool fitted in the reduced seat 64.

The reduced spring clamp 80 is connected to the engagement tang 72, so the movement of said engagement tang 72 by the spring clamp 32 of the spindle 12 achieves the activation of the reduced spring clamp 80 of the accessory 60.

The reduction accessory 60 comprises at least a pair of attachment devices 90, accessible from the abutment surface 62a, suitable for engaging with the engagement device 40 of the spindle 12 to fasten the accessory 60 to the spindle 12.

Preferably, the accessory 60 comprises a plurality of attachment devices 90, arranged around the accessory axis R, preferably in pairs in diametrically opposite positions.

The attachment device 90 comprises a coupling element 92, preferably protruding from the abutment surface 62a, suitable for coupling the prominence 48 of the engagement device 40. In particular, the coupling element 92 consists of a yielding element, which is a collet, insertable, in an idle configuration, in the engagement seat 44 and expandable, so as to couple the prominence 48 in a coupling configuration.

According to one embodiment, the attachment device 90 comprises the fixed coupling element 92, and a pin 94 translatable between an idle position, e.g., advanced, and a work position, e.g., retracted, on which is supported the coupling element 92.

Preferably, the pin 94 comprises a head 96 which, when the pin moves to work position, structurally interferes with the coupling element 92 and causes it to expand.

Preferably, the head 96 of the pin 94 has an active surface 96a, with truncated-cone shape, whereby the coupling element 92 comes into contact for expansion.

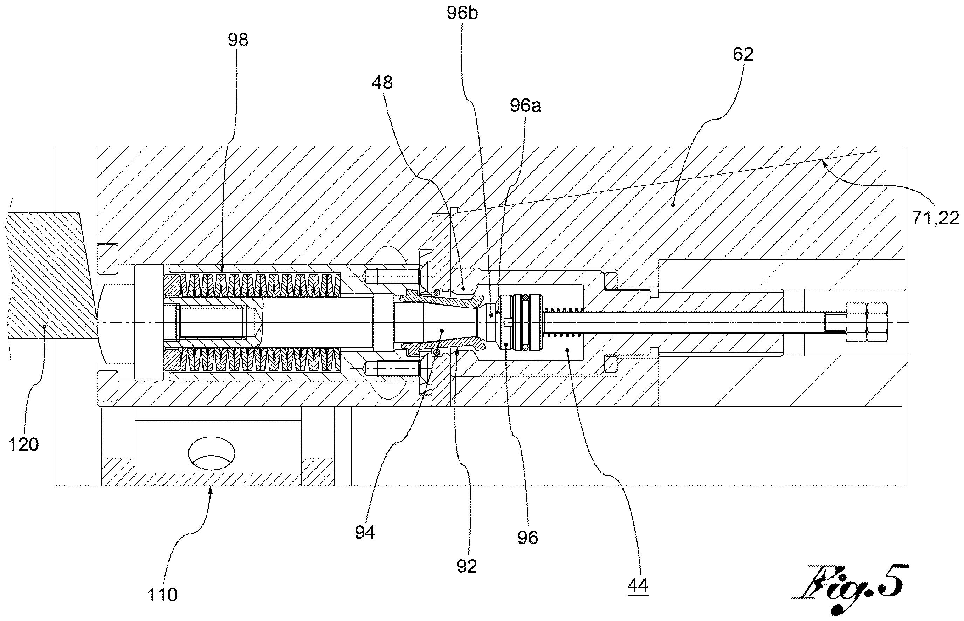

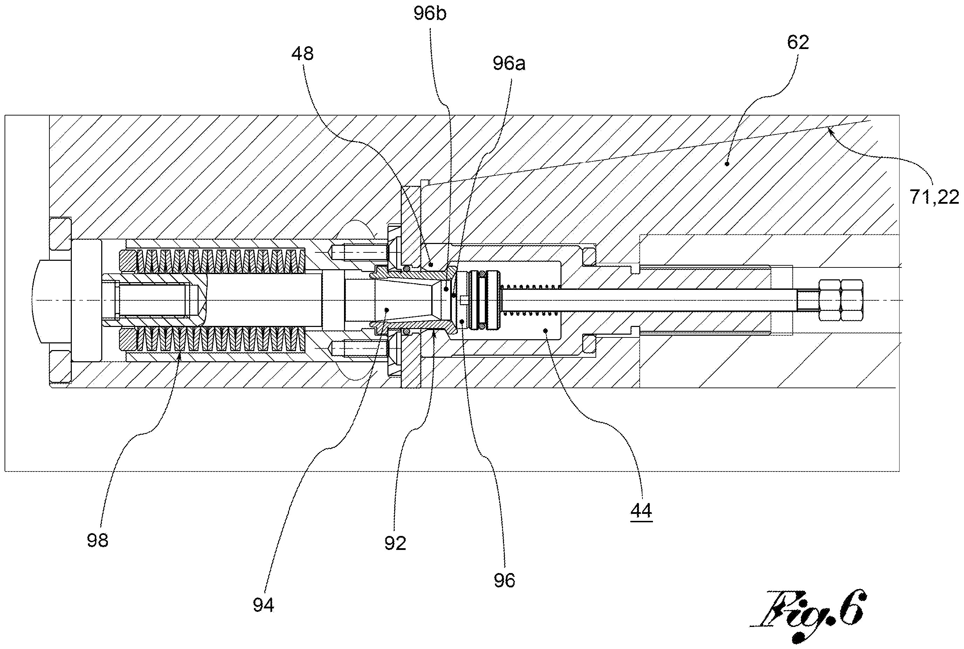

According to an embodiment variation (figures 5 and 6), the pin 94 also comprises a support tract 96b, adjacent to the active surface 96a, having a cylindrical outer surface, on which the coupling element 92 rests in pickup.

Advantageously, the support tract 96b is especially effective in ensuring the irreversibility of the spring clamp. In other words, because the coupling element 92 is fitted over the support tract 96b, its closing is prevented, e.g., in the case of the application of pulling actions.

Advantageously, furthermore, the support tract offsets any machining errors that could lead to an erroneous blockage of the reduction element.

The attachment device 90 also comprises elastic return means 98, e.g., comprising a plurality of Belleville washers, side by side, operating on the pin 94 to permanently influence it towards the work position.

Furthermore, the attachment device comprises an activation button 100, e.g., accessible and manoeuvrable from the front work surface 66a of the accessory 60, connected to the pin 94 and suitable for being pressed to keep or move the pin 94 in/to idle position.

The attachment device 90 is therefore controllable between an idle configuration, wherein the coupling element 92 is insertable in the engagement seat 44 of the spindle 12, and a coupling configuration, wherein the coupling element 92 is expanded to couple the prominence 48 of the engagement seat 44.

Preferably, the machine tool is coupled to a tool carrying chain or to an accessory magazine, comprising a support 110 suitable for supporting the accessory 60 and an activation element 120 suitable for influencing the attachment device 90 to keep it or move it in/to a coupling configuration.

In normal use, the accessory 60 is initially placed in the tool carrying chain or in the accessory magazine and the attachment device is in idle configuration.

In such idle configuration, the activation element 120 operates on the button 100, so the pin is kept in the idle position and the coupling element 92 is in the idle configuration in which insertion is possible.

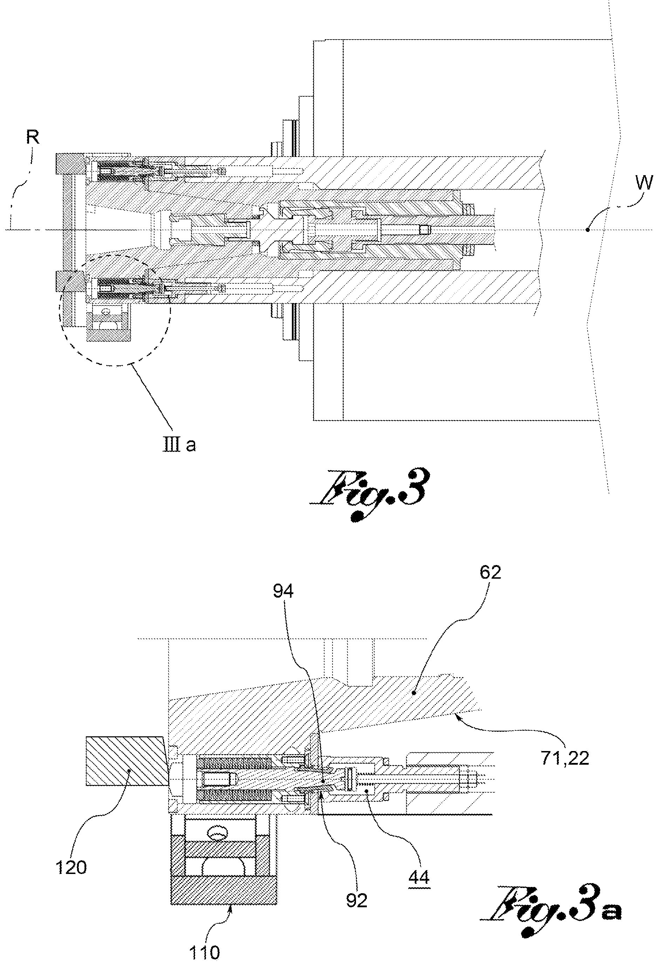

When the accessory 60 has to be mounted on the spindle 12, the spindle 12 is moved so the main body 60 of the accessory enters the engagement seat 18 (figures 3 and 3a).

In particular, the engagement tang 72 engages with the spring clamp 32 of the spindle.

Furthermore, the coupling element 92 enters the respective engagement seat 44 of the engagement device 40 of the spindle 12, while the closing means are moved to the opening configuration by the thrust applied by the pin 94.

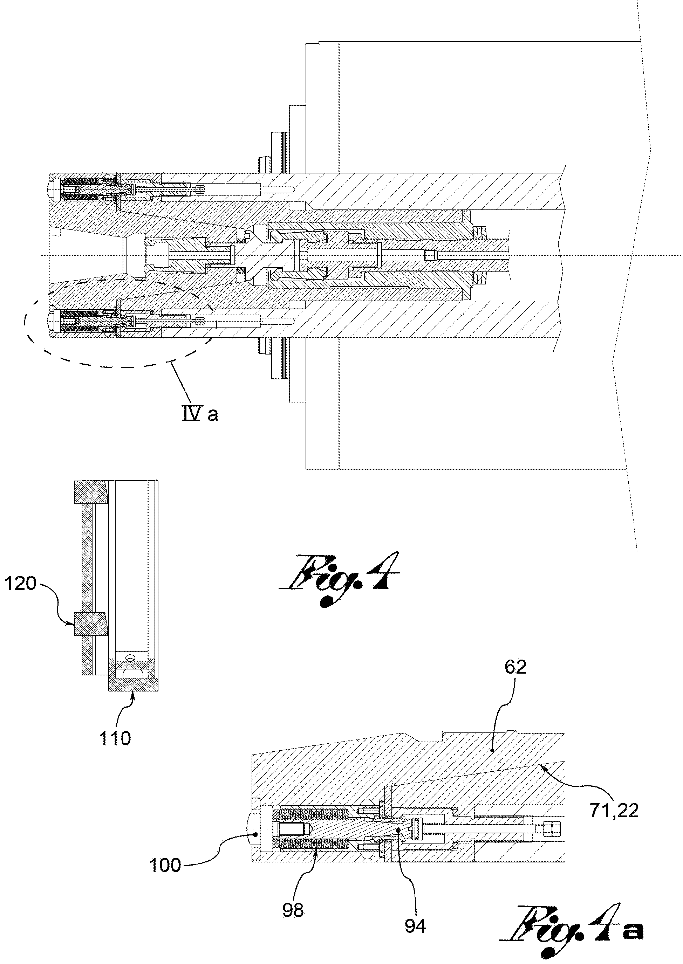

Subsequently, the attachment device 90 switches to coupling configuration (figures 4 and 4a), wherein the coupling element 92 couples the prominence 48 of the engagement device 40.

In particular, the further movement of the spindle releases the accessory 60 from the support 110 and disengages it from the activation element 120, so the return means bring the pin 94 into the backward position, causing the coupling element 92 to expand in the seat 44.

The accessory 60 is thus firmly connected to the spindle 12.

For the use of an ISO 50 tool, having a specific tang, said ISO 50 tool is inserted in the reduced seat 64 with coupling of shape with the truncated-cone surface 68, while the tang is engaged by the reduced spring clamp 80. By activating the grip device 34 of the spindle 12, the spring clamp 32 closes on the engagement tang 72 of the accessory and pulls it towards the inside, so as to activate the reduced spring clamp 80, which closes on the tang of the ISO 50 tool and pulls it towards the inside, locking it in work position.

To proceed to release the accessory, it is necessary to proceed in the reverse order.

Innovatively, the coupling system is particularly effective and reliable.

Advantageously, furthermore, the coupling system ensures excellent repeatability, inasmuch as it allows coupling the reduction accessory to the spindle, always in the same position.

According to a further advantageous aspect, the coupling system is particularly rigid; this represents a considerable advantage, above all for carrying out high-precision jobs.

It is clear that a technician in the sector, for the purpose of satisfying contingent requirements, could make changes to the coupling system described above.

For example, according to an embodiment variation (not shown), the closing means can be activated on command to allow accessing the seat.

According to a further embodiment variation, the elastic return means operate directly on the coupling element.

According to yet another embodiment variation, the coupling element, in the idle configuration, is completely housed in the main body and only exits from this in the coupling configuration.

Such variations are also contained in the protection scope as defined by the following claims.

## Claims

1. Reduction accessory (60), suitable for being coupled to and separated from a spindle (12) of a machine tool (1), comprising
- a main body (62) having an accessory axis (R), fitted with a reduced seat (64), which constitutes a cone attachment for the coupling of a work tool, and with a truncated cone attachment surface (71) for an engagement seat (18) in the form of a cone attachment of the spindle (12);
- at least one pair of attachment devices (90) for the releasable coupling to the spindle (12);
- wherein the attachment device (90) comprises a yielding coupling element (92) insertable, in an idle configuration, in an engagement seat (44) of the spindle (12), and deformable to couple a prominence (48) of said engagement seat of the spindle (12) in a coupling configuration, **characterized in that**
- the coupling element (92) is a collet, and
- the attachment device (90) comprises a pin (94) translatable from an idle position to a work position, on which the coupling element (92) is supported, wherein the pin (94) comprises a head (96) suitable for interfering structurally with the coupling element (92) so as to cause its dilation.

2. Reduction accessory according to claim 1, wherein the attachment devices (90) are arranged in a diametrically opposite position with respect to the accessory axis (R).

3. Reduction accessory according to claim 1 or 2, wherein the main body (62) has an abutment surface (62a) at right angles to the accessory axis (R) in correspondence to the termination of the attachment surface (71) and the attachment device (90) is accessible from the abutment surface (62a).

4. Reduction Accessory according to claim 1, wherein the head (96) of the pin (94) has an active surface (96a) of a truncated-cone shape with which the coupling element (92) comes into contact for expansion.

5. Reduction Accessory according to claim 4, wherein the pin (94) comprises a support tract (96b) adjacent to the active surface (96a), said surface (96a) having an outer cylindrical surface, which the coupling element (92) rests on in engagement.

6. Reduction accessory according to any of the previous claims, wherein the attachment device (90) comprises elastic return means (98) acting on the pin (94) to permanently press it towards the work position.

7. Reduction accessory according to any of the previous claims, wherein the attachment device comprises an activation button (100) connected to the pin (94), said button (100) being accessible and manoeuvrable from a front work surface (66a) of the accessory (60).

8. Reduction accessory according to any of the previous claims, comprising an engagement tang (72) positioned adjacent to the attachment surface (71) and suitable for being grasped by a spring clamp (32) of the spindle (12).

9. Reduction accessory according to any of the previous claims, comprising a reduced spring clamp (80) to grasp a work utensil inserted in the reduced seat (64), said reduced spring clamp (80) being connected to the engagement tang (72) to be operated.

10. Assembly comprising:
- a spindle (12) of a machine tool (1) provided with an engagement seat (18) in the form of a cone attachment having predefined dimensions;
- a reduction accessory (60) suitable for coupling to the engagement seat (18) of the spindle (12) according to any of the previous claims;
- a tool-holder chain or an accessory magazine fitted with an activation element (120) suitable for being engaged with the attachment device (90) to keep it or bring it into the idle configuration.

## Patentansprüche

1. Verkleinerungszubehör (60), welches dazu geeignet ist, mit einer Spindel (12) einer Werkzeugmaschine (1) gekoppelt und davon getrennt zu werden, umfassend
- einen Hauptkörper (62) mit einer Zubehörachse (R), welcher mit einer verkleinerten Aufnahme (64), welche eine Kegelbefestigung für das Koppeln eines Arbeitswerkzeugs ausmacht, und mit einer Kegelstumpf-Befestigungsfläche (71) für eine Eingriffsaufnahme (18) in der Form einer Kegelbefestigung der Spindel (12) ausgerüstet ist;
- wenigstens ein Paar von Befestigungsvorrichtungen (90) für das lösbare Koppeln mit der Spindel (12);
- wobei die Befestigungsvorrichtung (90) ein nachgiebiges Kopplungselement (92) umfasst, welches in einer Leerlaufkonfiguration in eine Eingriffsaufnahme (44) der Spindel (12) einsetzbar ist und verformbar ist, um in einer Kopplungskonfiguration einen Vorsprung (48) der Eingriffsaufnahme der Spindel (12) zu koppeln,
**dadurch gekennzeichnet, dass**
- das Kopplungselement (92) ein Spannfutter ist und
- die Befestigungsvorrichtung (90) einen von einer Leerlaufposition zu einer Arbeitsposition verschiebbaren Zapfen (94) umfasst, an welchem das Kopplungselement (92) gehaltert ist, wobei der Zapfen (94) einen Kopf (96) umfasst, welcher dazu geeignet ist, derart strukturell mit dem Kopplungselement (92) zu interferieren, dass er seine Aufweitung bewirkt.

2. Verkleinerungszubehör nach Anspruch 1, wobei die Befestigungsvorrichtungen (90) in Bezug auf die Zubehörachse (R) in einer diametrisch gegenüberliegenden Position angeordnet sind.

3. Verkleinerungszubehör nach Anspruch 1 oder 2, wobei der Hauptkörper (62) in einem rechten Winkel zu der Zubehörachse (R) in Übereinstimmung mit dem Abschluss der Befestigungsfläche (71) eine Anlagefläche (62a) aufweist und die Befestigungsvorrichtung (90) von der Anlagefläche (62a) zugänglich ist.

4. Verkleinerungszubehör nach Anspruch 1, wobei der Kopf (96) des Zapfens (94) eine aktive Fläche (96a) einer Kegelstumpfform aufweist, mit welcher das Kopplungselement (92) für eine Ausdehnung in Kontakt gelangt.

5. Verkleinerungszubehör nach Anspruch 4, wobei der Zapfen (94) benachbart zu der aktiven Fläche (96a) einen Halterungsteil (96b) umfasst, wobei die aktive Fläche (96a) eine äußere, zylindrische Fläche aufweist, an welcher das Kopplungselement (92) in einem Eingriff anliegt.

6. Verkleinerungszubehör nach einem der vorhergehenden Ansprüche, wobei die Befestigungsvorrichtung (90) elastische Rückstellmittel (98) umfasst, welche derart auf den Zapfen (94) wirken, dass sie ihn permanent in Richtung der Arbeitsposition drücken.

7. Verkleinerungszubehör nach einem der vorhergehenden Ansprüche, wobei die Befestigungsvorrichtung eine Aktivierungstaste (100) umfasst, welche mit dem Zapfen (94) verbunden ist, wobei die Taste (100) von einer vorderen Arbeitsfläche (66a) des Zubehörs (60) zugänglich und steuerbar ist.

8. Verkleinerungszubehör nach einem der vorhergehenden Ansprüche, umfassend einen Eingriffsdorn (72), welcher benachbart zu der Befestigungsfläche (71) positioniert ist und dazu geeignet ist, von einer Federklemme (32) der Spindel (12) gegriffen zu werden.

9. Verkleinerungszubehör nach einem der vorhergehenden Ansprüche, umfassend eine verkleinerte Federklemme (80), um ein in die verkleinerte Aufnahme (64) eingesetztes Arbeitsutensil zu greifen, wobei die verkleinerte Federklemme (80) mit dem zu betätigenden Eingriffsdorn (72) verbunden ist.

10. Anordnung, umfassend:
- eine Spindel (12) einer Werkzeugmaschine (1), welche mit einer Eingriffsaufnahme (18) in der Form einer Kegelstumpfbefestigung mit vordefinierten Abmessungen bereitgestellt ist;
- ein Verkleinerungszubehör (60), welches dazu geeignet ist, mit der Eingriffsaufnahme (18) der Spindel (12) gekoppelt zu werden, nach einem der vorhergehenden Ansprüche;
- eine Werkzeughalterkette oder ein Zubehörmagazin, welche/welches mit einem Aktivierungselement (120) ausgerüstet ist, welches dazu geeignet ist, mit der Befestigungsvorrichtung (90) in Eingriff gebracht zu werden, um sie/es in der Leerlaufkonfiguration zu halten oder in die Leerlaufkonfiguration zu bringen.

## Revendications

1. Accessoire de réduction (60), approprié pour être couplé à un arbre rotatif (12) d'une machine-outil (1) et séparé de celui-ci, comprenant :
- un corps principal (62) comportant un axe d'accessoire (R), muni d'un siège réduit (64), qui constitue une fixation conique pour le couplage d'un outil de travail, et une surface de fixation tronconique (71) pour un siège de prise (18) sous la forme d'une fixation conique de l'arbre rotatif (12) ;
- au moins une paire de dispositifs de fixation (90) pour le couplage libérable à l'arbre rotatif (12) ;
- dans lequel le dispositif de fixation (90) comprend un élément de couplage élastique (92) pouvant être inséré, sous une configuration folle, dans un siège de prise (44) de l'arbre rotatif (12), et pouvant être déformé de façon à se coupler avec une proéminence (48) dudit siège de prise de l'arbre rotatif (12) sous une configuration de couplage, **caractérisé en ce que** :
- l'élément de couplage (92) est une collerette, et
- le dispositif de fixation (90) comprend une broche (94) pouvant effectuer une translation d'une position folle à une position de travail, sur laquelle est supporté l'élément de couplage (92), la broche (94) comprenant une tête (96) appropriée pour interférer structurellement avec l'élément de couplage (92) de façon à provoquer sa dilatation.

2. Accessoire de réduction selon la revendication 1, dans lequel les dispositifs de fixation (90) sont disposés dans une direction diamétralement opposée par rapport à l'axe d'accessoire (R).

3. Accessoire de réduction selon la revendication 1 ou 2, dans lequel le corps principal (62) comporte une surface de butée (62a) à angle droit avec l'axe d'accessoire (R) en correspondance avec la terminaison de la surface de fixation (71), et le dispositif de fixation (90) est accessible à partir de la surface de butée (62a).

4. Accessoire de réduction selon la revendication 1, dans lequel la tête (96) de la broche (94) comporte une surface active (96a) d'une forme tronconique, avec laquelle vient en contact l'élément de couplage (92) pour la dilatation.

5. Accessoire de réduction selon la revendication 4, dans lequel la broche (94) comprend une piste de support (96b) au voisinage de la surface active (96a), ladite surface (96a) comportant une surface cylindrique extérieure sur laquelle repose l'élément de couplage (92) lors de la prise.

6. Accessoire de réduction selon l'une quelconque des revendications précédentes, dans lequel le dispositif de fixation (90) comprend des moyens de rappel élastiques (98) agissant sur la broche (94) de façon à appuyer celle-ci en permanence vers la position de travail.

7. Accessoire de réduction selon l'une quelconque des revendications précédentes, dans lequel le dispositif de fixation comprend un bouton d'activation (100) connecté à la broche (94), ledit bouton (100) étant accessible et manoeuvrable à partir d'une surface de travail avant (66a) de l'accessoire (60).

8. Accessoire de réduction selon l'une quelconque des revendications précédentes, comprenant une pointe de prise (72) positionnée au voisinage de la surface de fixation (71), et appropriée pour être saisie par une pince à ressort (32) de l'arbre rotatif (12).

9. Accessoire de réduction selon l'une quelconque des revendications précédentes, comprenant une pince à ressort réduite (80) pour saisir un ustensile de travail inséré dans le siège réduit (64), ladite pince de prise réduite (80) étant reliée à la pointe de prise (72) à actionner.

10. Ensemble, comprenant :
- un arbre rotatif (12) d'une machine-outil (1) muni d'un siège de prise (18) sous la forme d'une fixation conique ayant des dimensions prédéfinies ;
- un accessoire de réduction (60) approprié pour le couplage avec le siège de prise (18) de l'arbre rotatif (12) selon l'une quelconque des revendications précédentes ;
- une chaîne de support d'outils ou un magasin d'accessoires muni d'un élément d'activation (120) approprié pour venir en prise avec le dispositif de fixation (90) de façon à le maintenir ou à l'amener dans la configuration folle.
